# EUROPÄISCHE PATENTSCHRIFT

(11) **EP 4 408 604 B1**
(45) Veröffentlichungstag und Bekanntmachung des Hinweises auf die Patenterteilung: **05.11.2025**
(21) Anmeldenummer: 22792747.2
(22) Anmeldetag: 27.09.2022
(51) Int. Cl.: G05B 19/401, B23K 26/03, B23K 26/046, B23K 26/06, B23K 26/08, B23K 26/10, B23K 26/12, B23K 26/352, B23K 26/362, B23K 26/38, B23K 37/04, B23Q 15/22, B23K 37/02

(54) **VERFAHREN ZUM ERMITTELN EINER POSITION EINES WERKSTÜCKS IN EINEM BEARBEITUNGSRAUM EINES LASERPLOTTER ZUM SCHNEIDEN, GRAVIEREN, MARKIEREN UND/ODER BESCHRIFTEN DES WERKSTÜCKES, SOWIE VERFAHREN ZUM KALIBRIEREN UND LASERPLOTTER HIERFÜR**
METHOD FOR DETERMINING A POSITION OF A WORKPIECE IN A MACHINING AREA OF A LASER PLOTTER FOR CUTTING, ENGRAVING, MARKING AND/OR INSCRIBING THE WORKPIECE, AND CALIBRATION METHOD, AND LASER PLOTTER THEREFOR
PROCÉDÉ POUR DÉTERMINER UNE POSITION D'UNE PIÈCE À USINER DANS UNE CHAMBRE D'USINAGE D'UN TRACEUR LASER DESTINÉ À LA DÉCOUPE, LA GRAVURE, LE MARQUAGE DE LADITE PIÈCE ET/OU LA RÉALISATION D'INSCRIPTIONS SUR CELLE-CI, AINSI QUE PROCÉDÉ D'ÉTALONNAGE ET TRACEUR LASER ASSOCIÉ

(30) Priorität: 30.09.2021 AT 507762021
(43) Veröffentlichungstag der Anmeldung: 07.08.2024
(73) Patentinhaber: Trotec Laser GmbH, 4614 Marchtrenk (AT)
(72) Erfinder: HAGER, Paul, 4654 Bad Wimsbach (AT)
(86) Internationale Anmeldenummer: PCT/AT2022/060329
(87) Internationale Veröffentlichungsnummer: WO 2023/049945

(56) Entgegenhaltungen:
- CN-A- 104 907 705
- CN-A- 111 515 523
- US-A1- 2018 150 047
- US-B2- 9 492 892

## Beschreibung

Die Erfindung betrifft ein Verfahren zum Ermitteln einer Position eines Werkstücks in einem Bearbeitungsraum eines Laserplotters zum Schneiden, Gravieren, Markieren und/oder Beschriften des Werkstückes, sowie ein Verfahren zum Kalibrieren und einen Laserplotter hierfür, wie in den Ansprüchen 1, 3 und 4 beschrieben.

Aus dem Stand der Technik sind bereits Lasermaschinen bekannt, bei denen eine oder mehrere Laserquelle abwechseln betrieben werden. Derartige Lasermaschinen, sind beispielsweise sogenannte Laserplotter, die einen über einen mit Riemenantrieb betriebenen, verstellbaren Schlitten aufweisen, an dem eine Fokussiereinheit ebenfalls verstellbar angeordnet ist. Vorzugsweise werden dabei flache Werkstücke, wie Papier, Platten, Textilien, Kugelschreiber, Handys, Tabletts, Laptops, usw. über einen Laser, insbesondere Laserstrahl, bearbeitet, der vom der Laserquellen über Umlenkelemente an die Fokussiereinheit am Schlitten gefördert wird und von der Fokussiereinheit in Richtung Werkstück abgelenkt wird. Dabei weist der Laserplotter eine Steuereinheit zur Ansteuerung und Regelung aller Komponenten auf. Hierbei wird üblicherweise über eine externe Komponente, insbesondere einen Laptop, über einer handelsüblichen oder eigenen Software eine Graphik oder Text erstellt, welche anschließend in Form eines Jobs an die Lasermaschine, insbesondere deren Steuerung, übertragen wird. Dabei können an derselben oder einer weiteren Software bestimmte Parameter für die Bearbeitung des Werkstückes eingestellt werden, die in den Job integriert werden. Um das in den Bearbeitungsraum des Laserplotters eingelegte Werkstück erkennen zu können, werden bei den neueren Modellen eine oder mehrere Kameras eingesetzt, sodass das Werkstück anschließend am Display und/oder der extern angeschlossenen Komponente, insbesondere Laptop, angezeigt wird. Damit kann einfach der Startpunkt für die Fokussiereinheit festgelegt werden. Weiters ist es möglich, dass mehrere Jobs, insbesondere die Schnittbilder Zahl der möglichen Schnittbilder am Werkstück positioniert werden können.

Beispielsweise wird beim Laserplotter "FUSION EDGE" der Firma Epilog (https://www.epiloglaser.de/Lasermaschinen/fusion-edge-laser-cutter-engraver/) ein Kamerasystem am Deckel des Laserplotters angeordnet. Dadurch ist eine Positionierung von Grafiken am Bildschirm möglich. Das Kamerasystem weist dabei ein sogenanntes "Fischaugenobjektiv" auf, mit der der gesamte Bearbeitungsraum bei geschlossenem Deckel aufgenommen werden kann. Damit das Kamerasystem funktioniert, muss zuerst bei der erstmaligen Inbetriebnahme eine Kalibrierungsprozess durchgeführt werden, indem in den Bearbeitungsraum ein Kalibrierungselement, vorzugsweise mit speziell darauf angeordneten Symbolen, eingelegt werden, um anschließend bei geschlossenem Deckel die Kalibrierung durchgeführt werden kann. Nach der Kalibrierung wird nach dem Aufnehmen eines Werkstückes, welches durch das Kameraobjektiv verzerrt dargestellt wird, entsprechend korrigiert, damit der Nutzer dies verzerrungsfrei am Bildschirm erkennen kann.

Nachteilig bei dem "Fusion Edge" ist, dass der Nutzer zuerst das Werkstück in den Bearbeitungsraum einlegen muss, worauf anschließend der Deckel des Laserplotters geschlossen werden muss, damit über das Kamerasystem eine Aufnahme des eingelegten Werkstückes gemacht werden kann, die anschließend am Bildschirm der angeschlossenen Komponente angezeigt wird.

Weiters stellt die Firma "Glowforge Inc" Laserplotter mit einem Kamerasystem, wie beispielsweise in der WO2018/98398 A1 beschrieben, her, bei dem am Deckel des Laserplotters und auf der Fokussiereinheit eine Kamera angeordnet ist. Auch hier muss bei der Inbetriebnahme ein Kalibierprozess durchlaufen werden, um die eingesetzten Optiken entsprechend zu entzerren.

Nachteilig ist bei den Glowforge-Laserplottern ebenfalls, dass zur Bestimmung der Position und zur Aufnahme des Werkstücks dieses zuerst eingelegt und der Deckel anschließend geschlossen werden muss, um den Aufnahmeprozess starten zu können.

Unter https://fablab-rothenbura.de/eine-kamera-fuer-unseren-lasercutter/ ist eine Anwendung beschrieben, bei der in einen Lasercutter eine Webcam angebaut wurde, wobei diese am Deckel angeordnet ist. Im Gegenteil zu den anderen bekannten Systemen kann bei diesem System nur dann ein Bild aufgenommen werden, wenn der Deckel geöffnet ist.

Die US 2018/150047 A1 zeigt eine computernumerisch gesteuerte Maschine zur Bearbeitung eines in das Gehäuse auf einem Bearbeitungstisch eingelegtes Werkstück mittels eines Lasers, wobei der Laserstrahl über Umlenkelemente an einen Laserkopf geleitet wird und der Laserkopf über einen Schlitten verstellbar ist. Weiters werden ein oder mehrere Bilder mit einer Kamera, die im Deckel des Gehäuses und am Schlitten angeordnet sind, erfasst, die sich innerhalb des Gehäuses befindet. Hierzu wird ein Korrekturprozess zum Entzerren der aufgenommenen Bilder durchgeführt.

Nachteilig ist hierbei, dass beim Einlegen des Werkstückes für die Kontrolle der Position immer der Deckel geschlossen werden muss, um ein Bild vorzugweise an einem angeschlossenen Laptop angezeigt zu bekommen, sodass bei einer Korrektur der Position des Werkstückes der Deckel wieder geöffnet werden muss.

Die Aufgabe der gegenständlichen Erfindung liegt darin, ein Verfahren zum Ermitteln einer Position eins Werkstücks in einem Bearbeitungsraum eines Laserplotter zum Schneiden, Gravieren, Markieren und/oder Beschriften des Werkstückes, sowie einen Laserplotter hierfür zu schaffen, bei dem einerseits die obgenannten Nachteile vermieden werden und andererseits eine hohe Bedienerfreundlichkeit zur Ermittlung und Positionierung des Werkstücks zu schaffen.

Die Aufgabe wird durch einen Laserplotter gemäß Anspruch 1, ein Verfahren zum Ermitteln einer Position eines Werkstücks in einem Bearbeitungsraum eines Laserplotter zum Schneiden, Gravieren, Markieren und/oder Beschriften des Werkstückes gemäß Anspruch 3 sowie durch ein Verfahren zum Kalibrieren gemäß Anspruch 4 gelöst. Vorteilhafte Ausbildungen und/oder Verfahrensmaßnahmen sind in den Unteransprüchen beschrieben.

Vorteilhaft beim Laserplotter ist hierbei, dass der Nutzer jederzeit die Position des Werkstückes auf dem Display betrachten, egal ob der Deckel offen oder geschlossen ist. Die Positionserkennung des Werkstücks bei geöffnetem Deckel hat den Vorteil, dass dadurch einfach Positionskorrekturen durchgeführt werden können, da der Deckel nicht immer geschlossen werden muss, um ein Bild aufzunehmen.

Es ist die Ausbildung von Vorteil, bei der die Kamera mit einem sogenannten Fischaugenobjektiv ausgestattet ist. Dadurch wird erreicht, dass ein sehr großer Bearbeitungsraum mit einer Kamera abgedeckt werden kann, sodass bei kleineren Geräten nur eine Kamera benötigt wird. Bei größeren Anlagen bzw. Geräten ist es möglich, dass mehrere Kameras eingesetzt werden, um den gesamten Bearbeitungsraum zu erfassen.

Vorteilhaft bei dem Verfahren nach Anspruch 3 ist dabei, dass es damit erstmals möglich ist, in zwei unterschiedlichen Stellungen bzw. Positionen der Kamera eine Werkstückerkennung durchzuführen, wobei automatisch die Position der Kamera, also ob der Deckel geschlossen oder geöffnet ist, erkannt wird, sodass eine entsprechend der Position definierter Kamerakorrekturprozess durchgeführt wird.

Durch die Möglichkeit das Kamerasystem bei geöffnetem oder geschlossenem Deckel verwenden zu können, hat der Nutzer den wesentlichen Vorteil, dass das Positionieren des Werkstücks in einem definierten Arbeitsbereich am Bearbeitungstisch vereinfacht wird, da bei geöffnetem Deckel der Nutzer das Werkstück einlegt und am Bildschirm die Position kontrollieren kann. Liegt das Werkstück nicht in den definierten Bereich, so ist eine schnelle Korrektur möglich, da das Einlegen und Korrigieren bei geöffnetem Deckel erfolgen kann. Somit ist ein mehrmaliges Anpassen der Position einfach möglich, bis das Werkstück richtig positioniert ist, sodass anschließend der Deckel geschlossen werden kann und die Bearbeitungsprozess gestartet werden kann.

Wird jedoch ein Prozess durchgeführt, bei dem die Position des Werkstückes beliebig sein kann, so kann der Nutzer das Werkstück einlegen, den Deckel schließen und anschließend beispielsweise den Startpunkt am dargestellten Werkstück über die Software einstellen und den Prozess starten.

Vorteilhaft bei dem Verfahren nach Anspruch 4 ist hierbei, dass durch die Auswertung der Bildkoordinaten des Laser-Pointers, insbesondere des Laser-Pointer-Punktes, eine hohe Genauigkeit für die tatsächlichen Parameter erreicht wird. Diese können anschließend einfach mit den bekannten Maschinenkoordinaten zusammengefügt werden. Damit ist es einfach möglich, bestimmte Korrekturparameter zu generieren, die für die Anzeige eins aufgenommenen Werkstücks verwendet werden können. Hierbei können mehrere aufeinanderfolgende Abläufe, insbesondere Bildaufnahmen, auf unterschiedlichen Positionen durchgeführt werden, die mit den jeweiligen Maschinenkoordinaten in Verbindung gebracht werden, um die Genauigkeit für die Entzerrung bzw. Korrektur eins aufgenommenen Bildes zu erhöhen.

Da bei dem erfindungsgemäßen Laserplotter die Bildaufnahme sowohl mit geschlossenen als auch mit geöffnetem Deckel erfolgen kann, ist es erforderlich, dass auch mit zumindest beiden Positionen des Deckels der Kalibrierprozess mit eingeschalteten Laser-Pointer zur Auswertung der Bildkoordinaten des aufgenommenen Laser-Pointer-Punktes durchgeführt wird.

Vorteilhaft ist hierbei, dass damit ein exakter Abgleich der Maschinenkoordinaten mit den Bildkoordinaten durchgeführt werden kann. Durch die manuelle oder automatische Verstellung des Schlittens und der Fokussiereinheit sind diese Maschinenkoordinaten der Steuerung bekannt, die an eine externe Komponente übersendet werden. Die Bildkoordinaten werden anschließend softwaretechnisch im Laserplotter oder an der externen Komponente, insbesondere dem Laptop, ausgewertet, sodass diese mit dem Maschinenkoordinaten verglichen bzw. zusammengefügt und eventuell korrigiert werden können. Dabei kann eine höhere Kalibrierqualität erzielt werden, wenn mehrere Positionen für den Kalibrierprozesses aufgenommen werden und abgeglichen werden. Vorzugweise erfolgt die Positionsverstellung und Bildaufnahme für den Kalibrierprozess voll automatisch, sodass der Nutzer lediglich das Kalibrierobjekt, wenn dieses aufgrund des Bearbeitungstisches notwendig ist, eingelegt werden muss, worauf der Kalibrierprozesse von ihm gestartet wird und die Verstellung bzw. Positionierung des Schlittens und Fokussiereinheit automatisch erfolgt, wobei zumindest bei der Bildaufnahme der Laser-Pointer aktiviert wird bzw. ist, um den Laser-Pointer-Punkt anschließend softwaretechnisch auswerten zu können, d.h., dass die Bildkoordinaten den Laser-Pointer-Punkt entsprechen. Wird dabei der Laser-Pointer nicht direkt in den Laserstrahlverlauf eingekoppelt, sondern verläuft dieser extra oder ist der Laserpointer direkt auf der Fokussiereinheit angeordnet, so kann eine entsprechende Korrekturwert hinterlegt sein, damit die Maschinenkoordinaten, die den Laserstrahl definieren, mit dem Bildkoordinaten des Laser-Pointer-Punktes übereinstimmen.

Von Vorteil sind auch die Maßnahmen, bei denen bei zumindest der erstmaligen Inbetriebnahme des Laserplotters ein Kalibrierungsprozess mit geöffnetem und geschlossenem Deckel für den Kamerakorrekturprozess durchgeführt wird, indem auf dem Bearbeitungstisch ein Kalibrierungsobjekt mit darauf angeordneten Kalibrierungssymbolen eingelegt wird. Dadurch wird erreicht, dass eine automatische Korrektur des aufgenommenen Bildes zwischen den Positionen der Kamera bzw. des Deckels durchgeführt werden kann. Der Nutzer bekommt damit immer ein Bild/Bildsequenz/Video dargestellt, insbesondere mit gleicher Bildgröße, egal ob der Deckel geöffnet oder geschlossen ist. Der Vollständigkeit halber wird darauf hingewiesen, dass auch eine Aufnahme des Bildes in weiteren Positionen des Deckels möglich ist oder das je nach Deckelstellung eine entsprechende Korrektur durchgeführt wird, d.h., dass beispielsweise beim Öffnen oder Schließen des Deckels zu jeder beliebigen Position des Deckels eine Korrektur des Bildes vorgenommen wird.

Es sind aber auch die Maßnahmen von Vorteil, bei denen das Öffnen und Schließen des Deckels über ein Schaltelement erkannt wird, dass ein entsprechendes Signal an die Steuerung des Laserplotters sendet. Dadurch wird ermöglicht, dass eine automatische Umschaltung des Korrekturprozesses stattfinden kann. Der Nutzer braucht somit keinerlei Anpassungen vornehmen, egal ob dieser die Bildaufnahme bei geöffnetem oder geschlossenem Deckel vornehmen möchte. Somit ist auch eine schnelle Positionskorrektur des Werkstückes möglich, da keinerlei Einstellungen verändert werden müssen.

Es wird jedoch darauf hingewiesen, dass es selbstverständlich möglich ist, dass in der Software der Anwendung eine Deaktivierung des Kamerasystem allgemein oder zu den einzelnen Positionen möglich ist, wobei vorzugsweise die letzte Einstellung gespeichert bleiben, sodass bei neuerlicher Aktivierung diese verwendet werden. Eine Deaktivierung des Systems wird beispielsweise dann vorgenommen, wenn eine bewegliche Schutzabdeckung für die Kamera ihren Sichtbereich zumindest teilweise abdeckt. Weiters ist es möglich, dass bei Aktivierung des Bearbeitungsprozesses die Bildaufnahme unterdrückt wird. Es ist aber auch möglich, dass während des Bearbeitungsprozesses an einem Werkstück die Kamera eingeschaltet bleibt und das Bild/Bildsequenz oder Video am Display oder der externen Komponente ersichtlich ist. Dadurch kann der Bearbeitungsprozess über den Bildschirm bzw. über die externe Komponente beobachtet werden. Hierzu ist es auch möglich, dass zur Qualitätssicherung der Anwender die aufgenommenen Bilder bzw. Video aufnehmen und speichern kann, wozu dies optional über die Bedienersoftware einfach aktivierbar ist, sodass die externe Komponente, insbesondere die darauf laufende Software, oder der Laserplotter selbst, die Aufnahme speichert.

Vorteilhaft sind auch die Maßnahmen, bei denen die Position des Werkstücks direkt auf einer angeschlossenen externen Komponente, insbesondere Laptop, oder einem integrierten Bildschirm dargestellt wird. Dadurch wird erreicht, dass der Nutzer sofort nach dem Einlegen des Werkstückes dieses an der Komponente oder dem Bildschirm sehen kann und entsprechend weitere Schritte durchführen kann. Beispielsweise kann der Nutzer einfach einen Startpunkt für den Laser festlegen, sodass nach dem Start des Bearbeitungsprozess die Fokussiereinheit derart verstellt wird, dass der Laserstrahl an der korrespondierenden Position am Werkstück auftrifft und der Bearbeitungsprozess durchgeführt wird. Oder es ist auch möglich, dass mehrere Jobs bzw. Schnittbilder am dargestellten Werkstück positioniert und verschoben werden können, sodass eine optimale Platzausnützung des Werkstückes erzielt wird.

Von Vorteil sind die Maßnahmen, bei denen in der Kamera ein sogenanntes Fischaugenobjektiv eingesetzt wird, das den gesamten Bearbeitungsraum abdeckt.

Dadurch wird erreicht, dass mit einer Kamera die sehr große Bearbeitungsräume eines Laserplotter das Auslangen gefunden wird. Grundsätzlich ist es möglich oder wird bei größeren Anlagen zwei oder mehrere Kameras eingesetzt, um den gesamten Arbeitsraum abdecken zu können. Dabei wird im Hintergrund ein Bildzusammenführungsprozess durchgeführt, der aus den vorhandenen Bildern ein einziges Bild erzeugt und entsprechend in der Software bzw. am Bildschirm dargestellt wird.

Es sind auch die Maßnahmen von Vorteil, bei der für unterschiedliche Linsen der Fokussiereinheit für die Kamera unterschiedliche Parameter hinterlegt und geladen werden. Dadurch ist es möglich, dass eine automatische Anpassung der Tischhöhe bzw. des Abstandes von der Kamera vorgenommen wird, um eine optimale Darstellung des aufgenommenen Werkstücks zu erzielen.

Vorteilhaft sind die Maßnahmen, bei denen nach Aktivierung des Kalibrierprozess der Laser-Pointer aktiviert wird bzw. überprüft wird, ob dieser bereits aktiviert ist, worauf die Fokussiereinheit auf eine vorgegebenen Position am Bearbeitungstisch, insbesondere mit einem eingelegten Kalibrierobjekt, verstellt wird, worauf von der Kamera ein Bild des Bearbeitungsraums mit dem Laserpointer-Punkt aufgenommen wird, worauf die Position, insbesondere die Bildkoordinaten, des Laserpointer-Punktes ausgewertet wird und mit dem Maschinenkoordinaten der Fokussiereinheit und dem Schlitten mit den Bildkoordinaten zusammengeführt wird. Dadurch wird erreicht, dass eine sehr hohe Qualität bei der Darstellung des aufgenommenen Werkstücks erzielt wird. Dabei ist es möglich, dass aufgrund unterschiedlicher Koordinaten der Entzerrprozess bzw. Bildbearbeitungsprozess angepasst werden kann, da für unterschiedliche Koordinaten auch unterschiedliche Daten, insbesondere Parameter, ermittelt werden können bzw. gespeichert sind.

Schließlich sind die Maßnahmen von Vorteil, bei denen zur Kalibrierung unter Zuhilfenahme des Laserpointers mit mehreren Positionen der Fokussiereinheit und Schlitten durchgeführt wird. Dadurch wird erreicht, dass eine bessere Qualität für die Bildbearbeitung erzielt wird.

Die Erfindung wird anschließend in Form eines Ausführungsbeispiels beschrieben, wobei darauf hingewiesen wird, dass die Erfindung nicht auf das dargestellten und beschriebenen Ausführungsbeispiel bzw. Lösung begrenzt ist, sondern auf äquivalente Lösung übertragen werden kann.

Es zeigen:
- Fig.1: eine schaubildliche Darstellung einer Lasermaschine, insbesondere einen Laserplotter, zum Bearbeiten eines Werkstückes mit einem Kamerasystem am geschlossenen Deckel, in vereinfachter, schematischer Darstellung;
- Fig. 2: eine schaubildliche Darstellung der Lasermaschine, insbesondere des Laserplotters, gemäß Fig. 1 zum Bearbeiten eines Werkstückes mit einem Kamerasystem am geöffneten Deckel, in vereinfachter, schematischer Darstellung;
- Fig. 3: eine schematische Schnittdarstellung durch die Lasermaschine mit geöffnetem Deckel und eingelegten Kalibrierplatte, in vereinfachter, schematischer Darstellung;
- Fig. 4: eine schematische Schnittdarstellung durch die Lasermaschine mit geschlossenem Deckel und eingelegten Kalibrierplatte; in vereinfachter, schematischer Darstellung;
- Fig.5: eine schaubildliche Darstellung einer weiteren Lasermaschine, insbesondere eines Laserplotters, mit geöffnetem Deckel, bei dem zwei Kameras im Kamerasystem integriert sind, in vereinfachter, schematischer Darstellung;
- Fig.6: eine schaubildliche Darstellung der Lasermaschine gemäß Fig. 5 mit geschlossenem Deckel;
- Fig.7: eine schematische Darstellung eines Laserplotters mit eingelegten Kalibrierobjekt und aktivierten Laser-Pointer bei geschlossenem Deckel, in vereinfachter, schematischer Darstellung;
- Fig.8: eine schematische Darstellung des Laserplotters mit eingelegten Kalibrierobjekt und aktivierten Laser-Pointer bei geöffnetem Deckel, in vereinfachter, schematischer Darstellung;

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

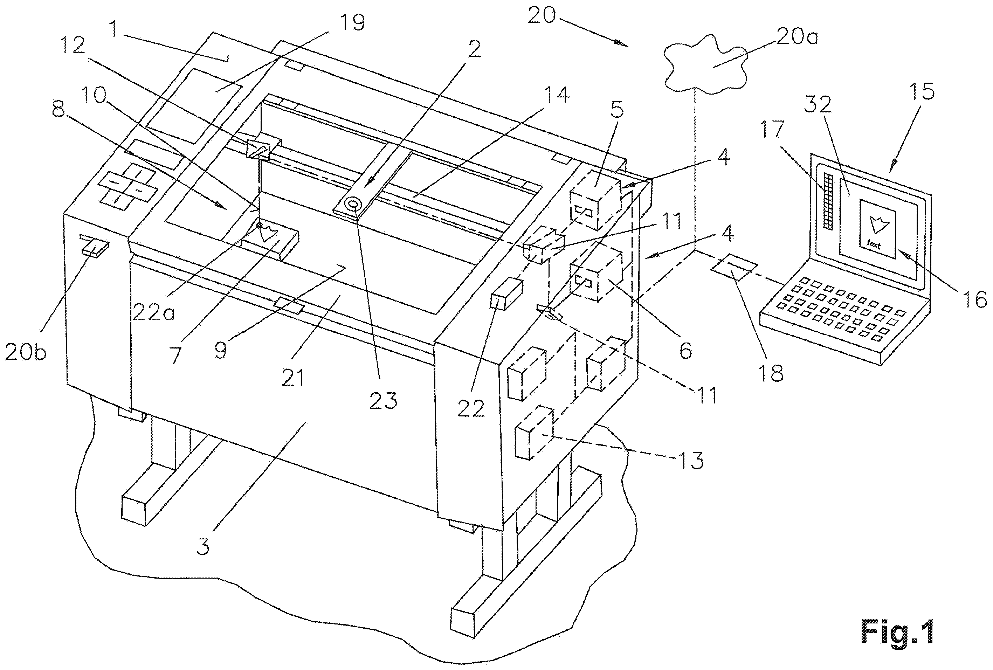

In den Fig. 1 bis 8 ist ein Ausführungsbeispiel für eine Lasermaschinen 1, insbesondere einem Laserplotter 1, gezeigt, in dem ein Kamerasystem 2 integriert ist.

Beim gezeigten Laserplotter 1, gemäß Fig. 1, ist in einem Gehäuse 3 zumindest eine, vorzugsweise zwei, Strahlenquellen 4 bzw. Laserquellen 4 in Form von Lasern 5, 6 angeordnet. Die Laser 5 und 6 wirken vorzugsweise abwechselnd auf ein zu bearbeitendes Werkstück 7 ein. Das Werkstück 7 ist bzw. wird in einem Bearbeitungsraum 8 des Laserplotters 1, insbesondere auf einem Bearbeitungstisch 9 positioniert, wobei der Bearbeitungstisch 9 vorzugsweise in seiner Höhe verstellbar ist. Ein von einer Strahlenquelle 4, insbesondere dem Laser 5 oder 6, abgegebener Laserstrahl 10 wird über Umlenkelemente 11 an zumindest eine verfahrbare Fokussiereinheit 12 gesendet, von der der Laserstrahl 10 in Richtung Werkstück 7 abgelenkt und zur Bearbeitung fokussiert wird. Die Steuerung, insbesondere die Positionssteuerung des Laserstrahls 10 zum Werkstück 7 erfolgt über eine in einer Steuereinheit 13 laufende Software, wobei das Werkstück 7 durch Verstellung eines Schlittens 14, an dem auch die Fokussiereinheit 12 verfahrbar angeordnet ist, über vorzugsweise einem Riemenantrieb in X-Y-Richtung bearbeitet wird. Hierbei ist es möglich, dass beispielsweise bei dem Bearbeitungsprozess "Gravur" die Verstellung des Schlittens 14 zeilenweise erfolgt, wogegen bei dem Bearbeitungsprozesse "Schneiden" der Schlitten 14 entsprechend der zu schneidenden Kontur verfahren wird, also nicht zeilenweise.

An einer externen Komponente 15, insbesondere einem Computer oder einem Steuergerät, wird eine Grafik 16 und/oder ein Text 16 über eine handelsübliche Software 17, wie beispielsweise CorelDraw, Paint, usw., oder der eigenen Anwendungssoftware 17, insbesondere Ruby, erstellt bzw. geladen, welche an die Steuerung 13 der Lasermaschine 1 in Form eines Jobs 18 exportiert bzw. übergeben wird. Vorzugsweise werden die zu übergebenden Daten von der gleichen oder einer anderen Software konvertiert, sodass die Steuerung 13 den Job 18 verarbeiten kann. Selbstverständlich ist es auch möglich, dass die Eingabe direkt am Laserplotter 1 über die vorhandenen Eingabemitteln 19, wie beispielsweise einem Touchscreen 19 oder Eingabetasten, erfolgen kann oder ein entsprechender Job 18 von einem Speichermedium 20, wie beispielsweise einer Cloud 20a, einen USB-Stick 20b, usw., geladen wird. Nachdem die Daten, insbesondere der oder die Jobs 18, übertragen sind oder direkt erstellt bzw. vom Speichermedium 20 geladen wurden, wird von der Lasermaschine 1, insbesondere deren Steuerung 13, der Job 18 abgearbeitet. Dabei ist es möglich, dass mehrere Jobs 18 gleichzeitig in der Lasermaschine 1, insbesondere dem Laserplotter 1, gespeichert und nacheinander abgearbeitet werden können.

Bei derartigen Lasermaschinen 1 ist es für die Sicherheit notwendig, dass zum Starten eines abzuarbeitenden Jobs 18, bei dem der Laserstrahl 10 auf das Werkstück 7 einwirkt, ein Deckel 21 bzw. Tür 21, der vorzugsweise zumindest teilweise transparent ausgebildet ist, geschlossen werden muss, wie dies in Fig. 1, 4 und 6 dargestellt ist. Anschließend kann das Bedienerpersonal den Laserpunkt bzw. einen Laser-Pointer 22, insbesondere Laser-Pointer-Punkt 22a, der in den Strahlengang des Lasers 5,6 eingekoppelt ist und über die Fokussiereinheit 12 in Richtung Bearbeitungstisch 8 abgelenkt wird, manuell oder auch automatisch am eingelegten Werkstück 7 positioniert, worauf der Job 18 für die Bearbeitung des Werkstückes 7 gestartet werden kann. Am Ende des Jobs 18 wird anschließend der Schlitten 14 vorzugsweise in die Ausgangsposition verstellt, sodass das fertiggestellte Werkstück 7 entnommen werden kann, worauf ein neuer Bearbeitungsprozess durch Einlegen eines neuen zu bearbeitendes Werkstück 7 bzw. einem Rohling 7 gestartet werden kann. Hierbei ist es von Vorteil, wenn das Ende der Bearbeitung optisch oder akustisch angezeigt wird, sodass der Nutzer nicht ständig die Lasermaschine 1 beobachten muss. Vollständigkeit halber wird erwähnt, dass die Verstellung der Fokussiereinheit 12 mit aktivierten Laser-Pointer 12 auch bei geöffneten Deckel 17 möglich ist, jedoch der Laser 5,6 nicht aktiviert werden kann.

Bei dem neuartigen Laserplotter 1 bzw. der Lasermaschine 1 ist nunmehr vorgesehen, dass die Lasermaschine 1 bzw. der Laserplotter 1 ein Verfahren zum Ermitteln einer Position eines Werkstück 7 im Bearbeitungsraum 8 des Laserplotter 1 zum Schneiden, Gravieren, Markieren und/oder Beschriften des Werkstückes 7 mittels dem Kamerasystem 2 durchführt bzw. der Laserplotter 1 dazu ausgebildet ist.

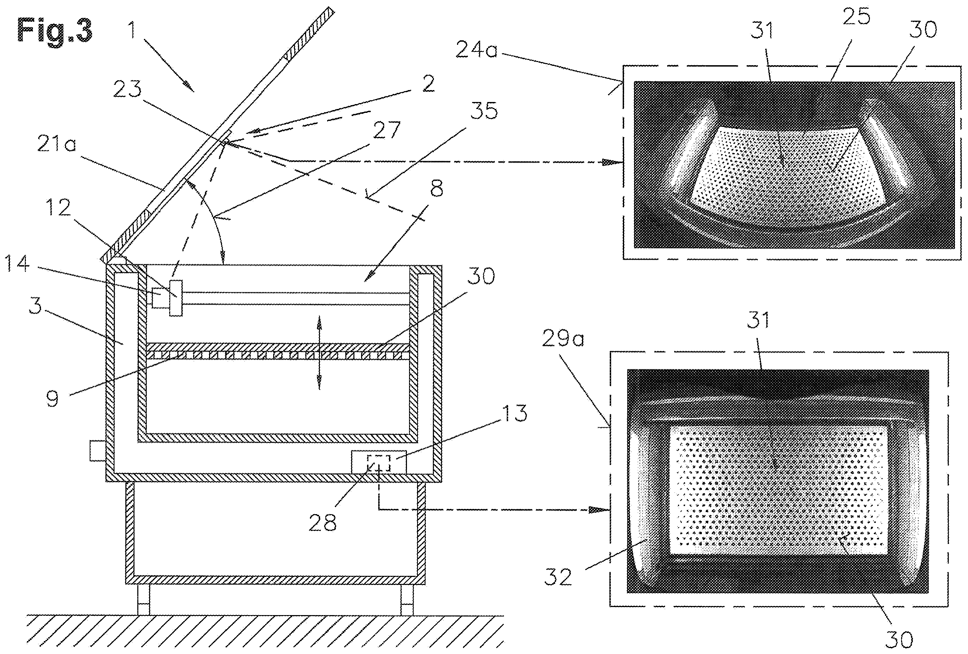

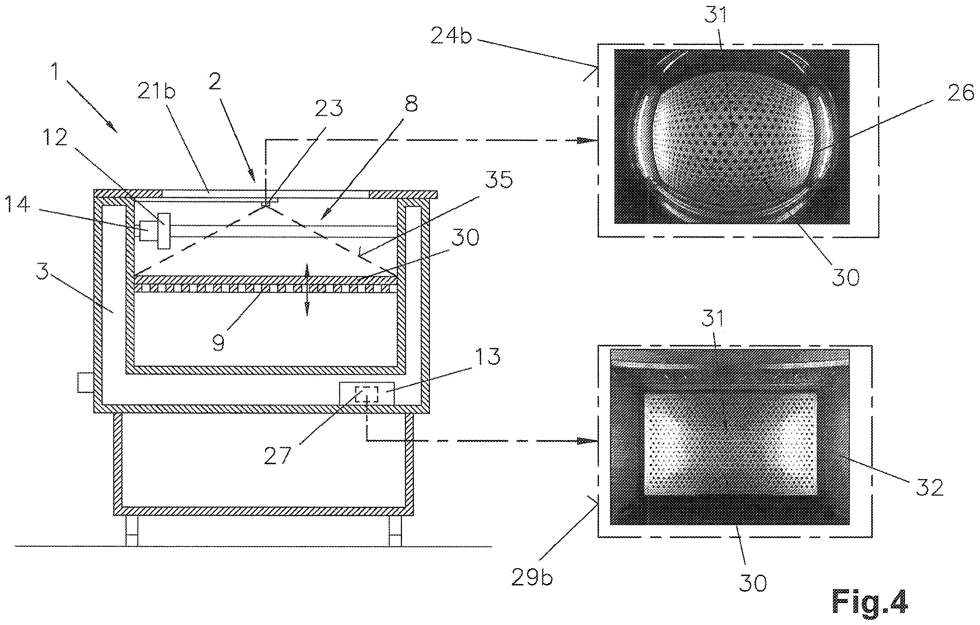

Hierzu weist das Kamerasystem 2 zumindest eine Kamera 23 mit vorzugsweise austauschbarer Linse (nicht dargestellt) auf, wobei die Kamera 23 vorzugsweise eine Fischaugenoptik 24 aufweist, wie dies mit einem aufgenommen Bild 25 und 26 gemäß der Figuren 3 und 4 veranschaulicht ist. Durch den Einsatz einer Fischaugenoptik 24 ist es möglich, dass ein sehr großer Bearbeitungsraum 8 mit nur einer Kamera 23 aufgenommen bzw. abgedeckt werden kann. Selbstverständlich ist es auch möglich, dass normale Optiken eingesetzt werden können, um den Bearbeitungsraum 8 des Laserplotters 1 aufnehmen zu können.

Wie schon in der Beschreibungseinleitung ausgeführt, sind Lasermaschinen 1 bzw. Laserplotter 1 mit derartigen Kamerasystemen 2 ausgestattet, die entweder bei geöffneten oder geschlossenen Deckel 21 eine Bildaufnahme ermöglicht.

Erfindungsgemäß ist nunmehr vorgesehen, dass zumindest eine Kamera 23 für den Bearbeitungsbereich 8 in dem Deckel 21 des Laserplotters 1 integriert ist, wobei die Erfassung der Position des eingelegten Werkstücks 7 sowohl bei geöffneten als auch bei geschlossenen Deckel 21 (21a,21b) durchgeführt wird, indem eine automatische Erkennung der Position durch Erkennung des Öffnungswinkels 27, des Deckels 21, durchgeführt wird, worauf ein entsprechender Kamerakorrekturprozess 28, wie schematisch in der Steuerung 13 der Lasermaschine 1 angedeutet, für den geöffneten oder geschlossenen Deckel 21 aktiviert wird.

Damit ein entsprechender Kamerakorrekturprozess 28 durchgeführt werden kann, muss bei der erstmaligen Inbetriebnahme des Laserplotters 1 ein Kalibrierungsprozess 29a mit geöffneten Deckel 21a und ein Kalibrierungsprozess 29b mit geschlossen Deckel 21b, wie in den Fig. 3 und 4 dargestellt, für den Kamerakorrekturprozess 28 durchgeführt werden. Hierzu wird auf dem Bearbeitungstisch 9 eine Kalibrierungsobjekt 30 mit darauf angeordneten Kalibrierungssymbolen 31 eingelegt. Anschließend wird von der Kamera 23 ein Bild 25,26 aufgenommen, worauf der Kalibrierungsprozess eine Entzerrung des aufgenommen Bildes 25 oder 26 durchführt, wie dies aus den Bildern 32,33 ersichtlich ist, d.h., dass jeweils ein Kalibrierprozess 29a,29b mit geöffneten Deckel 21a und geschlossenen Deckel 21b durchgeführt wird, um eine Entzerrung der Fischaugenoptik 24a, 24b zu erreichen, sodass der Anwender beim Einlegen eines Werkstückes 7 in den Bearbeitungsraum 9 ein entzerrtes und konturscharfes Bild 32,33 am Display bzw. der externen Komponente 15 angezeigt bekommt. Der Vollständigkeit halber wird erwähnt, dass die aus dem Kalibrierprozess resultierenden Kalibrier-Parameter 29 gespeichert werden, sodass diese vom Kamerakorrekturprozess 28 verwendet werden können, um ein oder mehrere eingelegte Werkstücke 7 zu erkennen, wobei hierzu je nach Stellung des Deckels 21, also geöffneter Deckel 21a oder geschlossener Deckel 21b, der Kamerakorrekturprozess 28 die entsprechende Anwendung automatisch verwendet. Man kann also sagen, dass der Kamerakorrekturprozess 28 in Abhängigkeit des Öffnungswinkels 27 des Deckels 21 umgeschaltet bzw. angepasst wird, d.h., dass bei vorzugsweise definierten Stellungen des Deckels 21 ein entsprechend dieser Stellung zugeordneter Kamerakorrekturprozess 28 von der Steuerung 13 verwendet wird. Hierbei können gewisse Stellungsbereiche bzw. Öffnungswinkelbereiche festgelegt werden, in dem ein bestimmter Kamerakorrekturprozess 28 durchgeführt wird. Somit ist es möglich, dass zumindest zwei oder mehr unterschiedliche Kamerakorrekturprozesse 28 eingesetzt werden. Vollständigkeit halber wird erwähnt, dass auch mehrere Korrekturprozesse 29 für unterschiedliche Stellungen des Deckels 21 ausgeführt werden können oder das softwaretechnisch eine Anpassung des Korrekturprozesses 29 für zwischen zwei Stellungen, insbesondere vollständig geschlossen und geöffnet, des Deckels 21 durchgeführt wird.

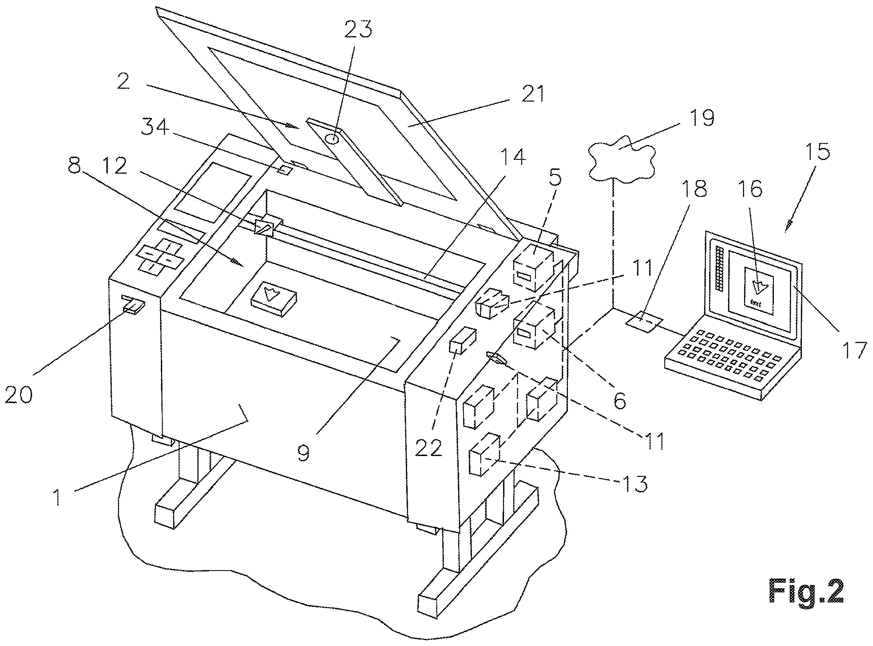

Vorzugsweise wird beim Öffnen des Deckels 21 das Kamerasystem 2 automatisch aktiviert, wobei dieses so lange aktiv bleibt, bis das Kamerasystem 2 manuell beendet wird oder der Bearbeitungsprozess, insbesondere der Laser 5,6, gestartet wird. Es ist zwar möglich, dass während der Bearbeitung das Kamerasystem 2 aktiviert bleibt, jedoch aufgrund des entstehenden Rauches wird empfohlen diese manuell einstellbare und speicherbare Option nicht zu aktivieren. Die Erkennung des Öffnens oder Schließens des Deckels 21 erfolgt über ein Schaltelement 34 (Fig. 2), wobei die Information vom Schaltelement 34 an die Steuerung 13 weitergeleitet wird, damit diese den entsprechenden Kamerakorrekturprozess 28 auswählen kann. Erfindungsgemäß werden jede beliebigen Öffnungswinkel 27 erfasst und weitergeleitet. Es können auch bestimmte Stellungen des Deckels 21, wie beispielsweise geöffnet oder geschlossen, an die Steuerung 13 weitergeleitet werden.

Dadurch kann die Steuerung 13 bzw. der vorzugsweise in der Steuerung 13 laufende Kamerakorrekturprozess 28 den entsprechend benötigten Korrekturprozess 29a, 29b für die Stellung des Deckels 21a oder 21b auswählen und das aufgenommene Bild 25 oder 26 entsprechend Bearbeiten, insbesondere Entzerren, um ein korrigiertes Bild 32,33 anzuzeigen.

Durch die erfindungsgemäße Möglichkeit der Bildaufnahme vom Kamerasystem 2 bei geöffneten Deckel 21a als auch bei geschlossenen Deckel 21b, ist es notwendig, dass einerseits die Stellung des Deckels 21 erkannt werden muss und andererseits ein entsprechend auf die Stellung des Deckels 21 angewendeter Korrekturprozess 29 durchgeführt wird, da die Sichtweite 35 der Kamera 23, wie mit strichlierten Linien in den Fig. 3 und 4 eingezeichnet, sehr unterschiedlich ausgerichtet sind. Wesentlich ist, dass der Anwender am Display bzw. der externen Komponente 15 ein sehr hochauflösendes Bild 32,33 eines eingelegten Werkstückes 7 angezeigt bekommt, um die Positionierung des Lasers 5,6, insbesondere des Laser-Pointer 22 bzw. Laser-Pointer-Punktes 22a, exakt durchführen zu können.

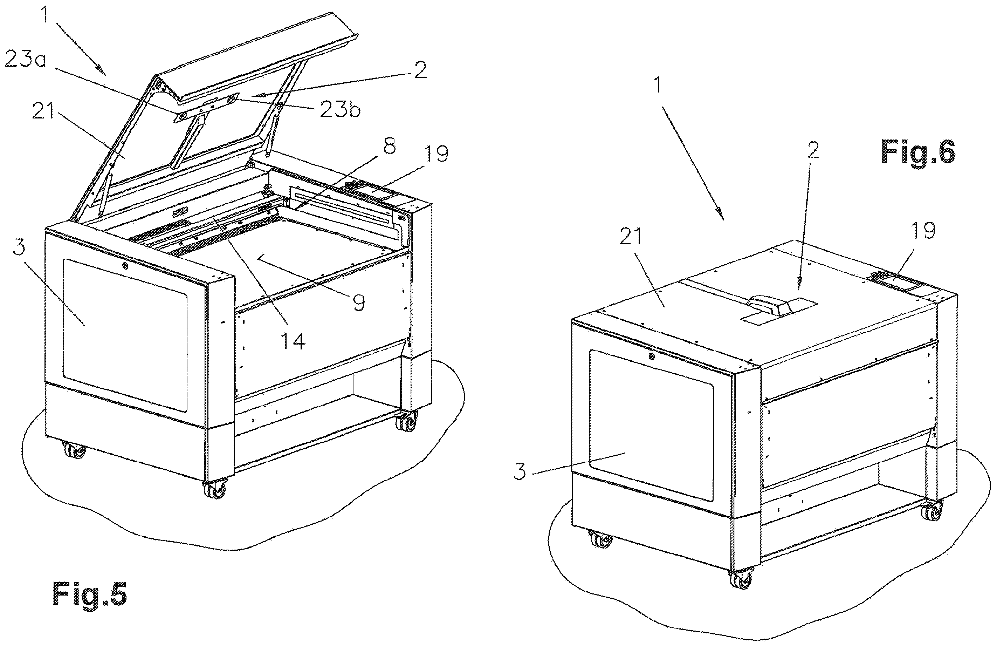

Wie weiters aus Fig. 5 und 6 ersichtlich, ist es möglich, dass mehrere Kameras 23a, 23b, im Kamerasystem 2 der Lasermaschine 1 eingesetzt werden können, um beispielsweise den Bearbeitungsraum 8 einer sehr großen Anlage bzw. Lasermaschine 1 erfassen zu können. Dabei ist es möglich, dass mehrere Kameras 23a, 23b in einem Kamerasystem 2 oder für jede eingesetzte Kamera 23a,23b ein eigenes Kamerasystem 2 verwendet wird. Beim Einsatz mehrerer Kameras 23a,23b werden die Einzelbilder jeder Kamera 23a,23b aufgenommen, die anschließend über dem Kamerakorrekturprozess 28 zu einem einzigen Bild 32,33 zusammengefügt werden, wobei dazwischen die Entzerrung der Einzelbilder ebenfalls durchgeführt wird.

Grundsätzlich ist zu erwähnen, dass bei angeschlossenem externer Komponente 15, insbesondere einem Laptop, die Bildaufnahme und Weiterleitung vom Laserplotter 1 auf die externe Komponente 15 in Echtzeit erfolgt, d.h., dass beim Einlegen eines Werkstückes 7 in den Bearbeitungsbereich 8 dies auf der externen Komponente 15 direkt beobachtet werden kann, da die Daten der Kamera 23 direkt über die Schnittstelle an die externe Komponente 15 weitergeleitet wird. Damit ist auch eine Ausbildung eines Laserplotters 1 möglich, bei dem der Kalibrierungsprozess 29 und/oder der Kamerakorrekturprozess 29 in der externen Komponente 15, insbesondere über die laufende Software, durchgeführt wird, da das aufgenommene Bild 25,26 direkt an die externe Komponente 15 gesendet wird, wobei zusätzlich noch die Position bzw. Stellung des Deckels 21 mitübersandt wird. Vollständigkeit halber wird erwähnt, dass der Kamerakorrekturprozess 28 als auch der Kalibrierungsprozess 29 auf beiden Geräten, also auf dem Laserplotter 1 und der externen Komponente 15, laufen können.

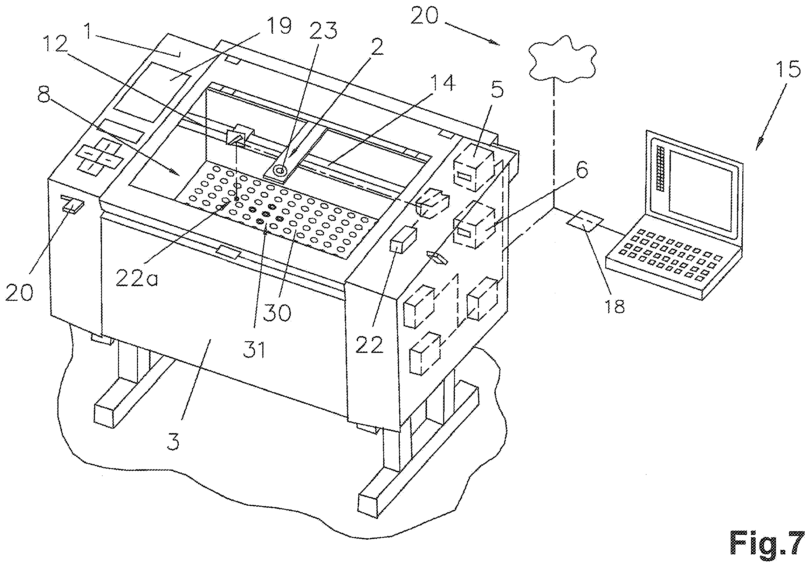

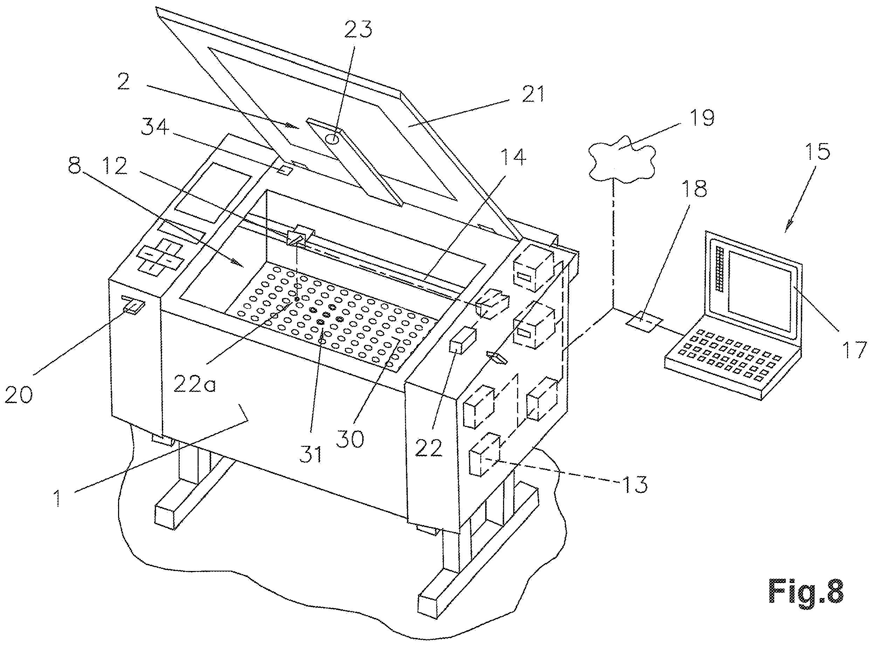

Des Weiteren ist in den Figuren 7 und 8 ein erfindungsgemäßes Kalibrierverfahren beschrieben, bei dem der Kalibrierprozess unter Zuhilfenahme des Laserpointers 22 bzw. Laser-Pointer-Punktes 22a und einer eingelegten Kalibrierobjektes 30 durchgeführt wird. Der Kalibrierprozess muss wiederum bei geschlossenen und geöffneten Deckel 21 durchgeführt werden, wobei dieser manuell als auch automatisch durchgeführt werden kann.

Hierbei muss zuerst in den Bearbeitungsraum 8, insbesondere auf den Bearbeitungstisch 9, ein Kalibrierobjekt 30 eingelegt werden, um eine sichtbare Positionierung des Laser-Pointers 22, insbesondere Laser-Pointer-Punktes 22a, vornehmen zu können. Erfindungsgemäß ist der Bearbeitungstisch 9 derart ausgebildet, dass bei aktiviertem Laser-Pointer 22 der Laser-Pointer-Punkt 22 am Bearbeitungstisch 9 sichtbar ist. Dies ist deshalb erforderlich, da für den Kalibrierungsprozess ein Bild vom Bearbeitungsraum 8 aufgenommen wird, wobei von einer Auswertesoftware anschließend die Position des Laser-Pointer-Punktes 22a ausgewertet wird und diese Bildkoordinaten mit den Maschinenkoordinaten der Fokuseinheit 12 und des Schlittens 14 abgeglichen werden, um eine exakte Entzerrung vornehmen zu können.

Vorzugsweise wird der Kalibrierprozess automatisch durchgeführt, wozu nach dem Einlegen des Kalibrierobjekts 30 der Kalibrierprozess auf der externen Komponente 15 oder direkt an der Lasermaschine 1 gestartet wird. daraufhin wird der Schlitten 14 und die Fokussiereinheit 12 auf eine oder mehrere Positionen verstellt, wobei hierzu der Laser-Pointer 22 aktiviert ist und der Laser-Pointer-Strahl eingekoppelt wird, sodass der Laser-Pointer-Punkt 22a am eingelegten Kalibrierungsobjekt 30 sichtbar ist. Wurde der Schlitten 14 und die Fokussiereinheit 12 in die definierte Position verstellt, so werden, falls nicht schon hinterlegt, diese Maschinenkoordinaten aufgenommen und vorzugsweise gespeichert. Anschließend wird über die Kamera 23 ein Bild des Bearbeitungsraumes 8 aufgenommen und entsprechend von einer Software der am Bild ersichtliche Laser-Pointer-Punkt 22a ausgewertet, sodass entsprechende Bildkoordinaten ermittelt werden. diese werden anschließend mit dem Maschinenkoordinaten zusammengefügt, sodass entsprechende Parameter für den Kalibrierprozess ermittelt und gespeichert werden können. Diese Parameter werden anschließend vom Kamerakorrekturprozess 28 für die Bearbeitung eines Aufgenommenen Bildes 25,26 herangezogen, damit der Anwender immer eine schöne Darstellung des eingelegten und aufgenommen Werkstückes 7 betrachten kann.

Vollständigkeit halber wird darauf hingewiesen, dass mehrere Positionen für den Kalibrierungsprozess angefahren werden, um mehrere Vergleichsdaten zu erhalten, wodurch die Qualität der Bildbearbeitung verbessert wird. Von Vorteil ist es dabei, dass jene Positionen für die Bildaufnahme verwendet werden, bei denen der Laser-Pointer-Punkt 22a an der aufgenommenen Bild gut ersichtlich ist, sodass eine sichere Auswertung und Bestimmung der Bildkoordinaten erreicht wird. hierbei ist es nicht wesentlich, ob der Laser-Pointer-Punkt 22a auf eine bestimmtes Kalibriersymbol 31 positioniert ist oder wird, sondern dass der Laser-Pointer-Punkt 22a gut für die Kamera 23 sichtbar ist.

Dadurch ist auch eine manuelle Einstellung des Laser-Pointer-Punktes 22a möglich, da durch die manuelle Verstellung des Schlittens 14 und der Fokussiereinheit 12 einerseits die Maschinenkoordinaten bekannt sind, worauf die Bildkoordinaten durch Aufnahme eines Bildes 25,26 von der Kamera 23 ausgewertet wird, sodass die Maschinenkoordinaten und die Bildkoordinaten zusammengefügt werden können. Bei der Verwendung von Kalibrierobjekten 30 sind oftmals schwarze Punkte angeordnet, sodass es vorteilhaft ist, dass der Laser-Pointer 22 bzw. der Laser-Pointer-Punkt 22a auf Bereiche bzw. Stellen am Kalibrierobjekt 30 positioniert wird, die gut sichtbar sind, insbesondere in den Bereichen zwischen den schwarzen Punkten.

Eine weitere optionale Funktion am Laserplotter 1 ist, dass der Deckel 21 manuell oder automatisch geöffnet und geschlossen werden kann. Damit ist es möglich, dass beim Kalibrierprozess unabhängig der Stellung des Deckels 21, also ob geschlossen oder geöffnet, eine automatische Verstellung des Schlittens 14 und der Fokussiereinheit 12 für die Maschinenkoordinaten und eine Bildaufnahme zur Ermittlung der Bildkoordinaten durchgeführt wird, indem vorzugsweise zuerst mit der gerade vorhandene Position des Deckels 21 durchgeführt wird und anschließend der Deckel 21 automatisch geöffnet oder geschlossen wird, worauf der Kalibrierungsprozess wiederum ausgeführt wird. Damit wird sichergestellt, dass der Kalibrierungsprozess immer mit geöffneten und geschlossenen Deckel 21 durchgeführt wird.

Erfindungsgemäß sind bei aktiviertem Kalibrierungsprozess zur Aufnahme eines Bild 25,26 des Bearbeitungsraumes 8 der Schlitten 14 und die Fokussiereinheit 12 auf eine frei wählbare oder definierte Position positioniert und der Laser-Pointer 22 ist zum Erzeugen eines sichtbaren Laser-Pointer-Punktes 22a am Bild 25,26 aktiviert. Dabei ist es von Vorteil, wenn mehrere unterschiedliche Positionen für den Kalibrierprozess vorzugsweise automatisch angefahren werden und bei jeder Position ein Bild 25,26 mit aktivierten Laser-Pointer 22 aufgenommen wird, damit der abfotografierte bzw. aufgenommene Laser-Pointer-Punkt 22a für die Erzeugung der Bildkoordinaten ausgewertet werden kann. Hierbei ist es auch möglich, dass am Kalibrierobjekt 30 entsprechende Kalibrier-Positionen für den Laser-Pointer-Punkt, bei der der Laser-Pointer-Punkt 22a gut sichtbar mit vorzugsweisem hellem Hintergrund, gekennzeichnet sind, sodass auch eine manuelle Verstellung möglich ist.

Grundsätzlich ist zu erwähnen, dass der Laserplotter eine Abstandsmesseinrichtung aufweist, sodass eine automatische Anpassung der Tischhöhe durchgeführt wird. Dies ist deshalb vorteilhaft, da die Kalibrierung bzw. Entzerrung des aufgenommenen Bildes 25,26 am besten mit einem definierten Abstand von der Kamera 23 zur Oberfläche des Kalibrierobjektes 30 und somit auch zur Oberfläche des Werkstückes 7 abgestimmt ist, d.h., dass bei unterschiedlich dicken Werkstücken 7 immer der Abstand auf die Oberfläche des Werkstückes 7 gemessen wird und entsprechend der Bearbeitungstisch 7 verstellt wird, um immer annähernd den gleichen Abstand zur Kamera 23 zu erhalten.

Der Vollständigkeitshalber wird darauf hingewiesen, dass sämtliche Prozesse direkt in dem Laserplotter 1 oder auch über die externe Komponente 15, insbesondere einem angeschlossenen Laptop, durchgeführt werden können, d.h., dass beispielsweise der Kalibrierungsprozess von der externen Komponente 15 gestartet und die softwaretechnische Verarbeitung der aufgenommen Bilder 25,26 auch auf der externen Komponente 15 durchgeführt wird. Selbstverständlich ist es möglich, dass dies auch über die Cloud 20a erfolgen kann.

Als Kamerasystem 2 wird in der Erfindung die Befestigung bzw. Halterung für die Kamera 23 und die darin verlaufenden Leitungen zu den entsprechenden internen Komponenten, insbesondere der Steuerung 13, verstanden.

Grundsätzlich ist bei dem dargestellten Laserplotter 1 eine Laserstrahlführung über Umlenkelemente 11 von einer Laserquelle 4, insbesondere Laser 5,6, zur Fokussiereinheit 12 dargestellt, wobei jedoch die Umlenkelemente 11 durch einen Lichtwellenleiter ersetzt werden, kann, d.h., dass die Umlenkelemente 11 durch einen Lichtwellenleiter gebildet ist, der den von der Laser 5,6 erzeugten Laserstrahl 10 zur Fokussiereinheit 12 leitet. Ebenso ist es möglich, dass als Strahlenquelle 4, insbesondere Laser 5,6, unterschiedlichste Typen eingesetzt werden können, die auch direkt auf der Fokussiereinheit 12 positioniert sein kann, d.h., dass beispielsweise beim Einsatz eines Diodenlaser dieser direkt auf der Fokussiereinheit 12 angeordnet ist und der erzeugte Laserstrahl 10 in den Bearbeitungsraum 8, insbesondere in Richtung Bearbeitungstisch 9, gerichtet ist.

Der Ordnung halber wird darauf hingewiesen, dass die Erfindung nicht auf die dargestellten Ausführungsvarianten beschränkt ist, sondern auch weitere Ausbildungen und Aufbauten beinhalten können. Die Erfindung wird durch die Ansprüche definiert.

## Patentansprüche

1. Laserplotter (1) zum Gravieren, Markieren und/oder Beschriften eines Werkstückes (7), der einen Bearbeitungsraum (8) zum Positionieren eines Werkstückes (7), zumindest eine Strahlenquelle (4) in Form von Lasern (5,6) vorzugsweise mit entsprechenden Umlenkelementen (11) und einer vorzugsweise verfahrbaren Fokussiereinheit (12) und einer Steuereinheit (13) zum Steuern eines über vorzugsweise einen Riemenantrieb betriebenen Schlitten (14) mit daran verfahrbarer angeordneten Fokussiereinheit (12) aufweist, wobei zum Ermitteln der Position des Werkstückes (7) im Bearbeitungsraum (8) bzw. am Bearbeitungstisch (9) zumindest ein Kamerasystem (2) mit einer Kamera (23) angeordnet ist, wobei die Positionserkennung zum Erkennen der Lage des Werkstückes (7) bei geöffneten als auch bei geschlossenen Deckel (21a,21b) ausgebildet ist, wobei die Kamera (23) am Deckel (21) des Laserplotters (1) angeordnet ist, wobei ein Sensor, insbesondere ein Schaltelement (34), für den Deckel (21) zum Erkennen der Stellung des Deckels (21) angeordnet ist, wobei die Steuerung (13) ausgebildet ist, die Information vom Sensor, insbesondere Schaltelement (34), über die Erkennung des Öffnens oder Schließens des Deckels (21a,21b) weitergeleitet zu bekommen, wobei die Steuerung (13) ausgebildet ist, jeden beliebigen erfassten Öffnungswinkel (27) weitergeleitet zu bekommen, worauf entsprechend der erkannten Deckelposition bzw. Stellung des Deckels (21) ein Kamerakorrekturprozess (28) für geöffneten oder geschlossenen Deckel (21a, 21b) umschaltbar ist, wobei die Steuerung (13), vorzugsweise der in der Steuerung (13) laufende Kamerakorrekturprozess (28), dem entsprechend benötigten Korrekturprozess (29a, 29b) für die Stellung des Deckels (21a oder 21b) auswählt und das aufgenommene Bild (25 oder 26) entsprechend bearbeitet, insbesondere entzerrt, und ein korrigiertes Bild (32, 33) anzeigt.

2. Laserplotter (1) nach Anspruch 1, **dadurch gekennzeichnet, dass** die Kamera (23) mit einem sogenannten Fischaugenobjektiv ausgestattet ist.

3. Verfahren zum Ermitteln einer Position eines Werkstück (7) in einem Bearbeitungsraum (8) eines Laserplotter (1) gemäß Anspruch 1 zum Schneiden, Gravieren, Markieren und/oder Beschriften des Werkstückes (7), bei dem in einem Gehäuse (3) des Laserplotters (1) zumindest eine Strahlquelle (4) in Form eines Lasers (5,6) eingesetzt wird, wobei das Werkstück (7) auf einem Bearbeitungstisch (8) abgelegt wird und die Position zumindest eines eingelegten Werkstücks (7) am Bearbeitungstisch (9) bzw. im Bearbeitungsraum (8) über zumindest eine Kamera (23) erfasst wird, wobei zum Bearbeiten des Werkstück (7) ein von der Strahlquelle (4) abgegebener Laserstrahl (10) über vorzugsweise Umlenkelemente (11) an zumindest eine Fokussiereinheit (12) gesendet wird, von der der Laserstrahl (10) in Richtung Werkstück (7) abgelenkt und zur Bearbeitung fokussiert wird, wobei die Steuerung über eine in einer Steuereinheit (13) laufende Software vorzugsweise durch Abarbeitung eines sogenannten Jobs (18), insbesondere übergebenen oder geladene Daten, erfolgt, wobei das Werkstück (7) durch Verstellung eines Schlittens (14) über vorzugsweise einem Riemenantrieb in X-Y-Richtung bearbeitet wird, wobei zumindest eine Kamera (23) für den Bearbeitungsraum (8) in einem Deckel (21) des Laserplotters (1) integriert ist, wobei die Erfassung der Position des eingelegten Werkstücks (7) oder der Bearbeitungsraum, wie beispielsweise das Lineal, sowohl bei geöffneten als auch bei geschlossenen Deckel (21a,21b) durchgeführt wird, indem eine automatische Erkennung der Position durch die Erkennung des Öffnungswinkels (27) des Deckels (21), durchgeführt wird, worauf ein entsprechender Kamerakorrekturprozess (28) für den geöffneten oder geschlossenen Deckel (28) aktiviert wird,indem die Steuerung (13) bzw. der vorzugsweise in der Steuerung (13) laufende Kamerakorrekturprozess (28) den entsprechend benötigten Korrekturprozess (29a, 29b) für die Stellung des Deckels (21a oder 21b) auswählt und das aufgenommene Bild (25 oder 26) entsprechend bearbeitet, insbesondere entzerrt, und ein korrigiertes Bild (32,33) anzeigt..

4. Verfahren zum Kalibrieren des Zusammenhangs der Bildkoordinaten mit den Maschinenkoordinaten eines Laserplotters gemäß Anspruch 1 zum Schneiden, Gravieren, Markieren und/oder Beschriften des Werkstückes (7), bei dem in einem Gehäuse (3) des Laserplotters (1) zumindest eine Strahlquelle (4) in Form eines Lasers (5,6) eingesetzt wird, wobei das Werkstück (7) auf einem Bearbeitungstisch (8) abgelegt wird und die Position zumindest eines eingelegten Werkstücks (7) am Bearbeitungstisch (9) bzw. im Bearbeitungsraum (8) über zumindest eine Kamera (23) erfasst wird, wobei für den Kalibrierungsprozess der Schlitten (14) und die Fokussiereinheit (12) auf eine frei wählbare oder definierte Position positioniert wird, worauf ein Bild (25,26) von der Kamera (23) im Deckel (21) vom Bearbeitungsraum (8) mit aktiviertem Laser-Pointer (22), insbesondere ersichtlichen Laser-Pointer-Punkt (22a) aufgenommen wird, wobei über eine Auswertesoftware die Bildkoordinaten des Laser-Pointers (22), insbesondere des Laser-Pointer-Punktes (22a), ermittelt wird und diese Bildkoordinaten mit den Maschinenkoordinaten der Fokuseinheit (12) und des Schlittens (14) abgeglichen werden, wobei eine exakte Entzerrung des Bildes (25, 26) vorgenommen wird.

5. Verfahren nach Anspruch 3 oder 4, **dadurch gekennzeichnet, dass** bei zumindest der erstmaligen Inbetriebnahme des Laserplotters (1) ein Kalibrierungsprozess (29) mit geöffneten und geschlossen Deckel (21a,21b) für den Kamerakorrekturprozess (28) durchgeführt wird, indem auf dem Bearbeitungstisch (9) eine Kalibrierungsobjekt (30) mit darauf angeordneten Kalibrierungssymbolen (31) eingelegt wird.

6. Verfahren nach einem der vorhergehenden Ansprüche 3 bis 5, **dadurch gekennzeichnet, dass** das Öffnen und Schließen des Deckels (21) über ein Schaltelement (34) erkannt wird, dass ein entsprechendes Signal an die Steuereinheit (13) des Laserplotters (1) sendet.

7. Verfahren nach einem der vorhergehenden Ansprüche 3 bis 6, **dadurch gekennzeichnet, dass** die Position des Werkstücks (7) direkt auf einer angeschlossenen externen Komponente (15), insbesondere Laptop, oder einem integrierten Bildschirm dargestellt wird.

8. Verfahren nach einem der vorhergehenden Ansprüche 3 bis 7, **dadurch gekennzeichnet, dass** in der Kamera (23) ein Objektiv, insbesondere ein sogenanntes Fischaugenobjektiv, eingesetzt wird, die den gesamten Bearbeitungsraum (8) abdeckt.

9. Verfahren nach einem der vorhergehenden Ansprüche 3 bis 8, **dadurch gekennzeichnet, dass** die Erkennung der Position eines oder mehrerer eingelegter Werkstücke (7) manuell über die externe Komponente (15) oder einem Betätigungselement bzw. Touchscreen am Laserplotter (1) ausgelöst wird bzw. ausgelöst werden kann.

10. Verfahren nach einem der vorhergehenden Ansprüche 3 bis 9, **dadurch gekennzeichnet, dass** nach der Positionserkennung des Werkstücks (7) die Fokussiereinheit (12) entsprechend dem dargestellten Werkstück (7) zum Bearbeiten des Werkstückes (7) manuell oder automatisch positioniert wird.

11. Verfahren nach einem der vorhergehenden Ansprüche 3 bis 10, **dadurch gekennzeichnet, dass** für unterschiedliche Linsen der Fokussiereinheit (12) für die Kamera (23) unterschiedliche Kalibrier-Parameter hinterlegt und geladen werden.

12. Verfahren nach einem der vorhergehenden Ansprüche 3 bis 11, **dadurch gekennzeichnet, dass** nach Aktivierung des Kalibrierprozess der Laser-Pointer aktiviert wird bzw. überprüft wird, ob dieser bereits aktiviert ist, worauf die Fokussiereinheit auf eine vorgegebenen Position am Bearbeitungstisch, insbesondere mit einem eingelegten Kalibrierobjekt, verstellt wird, worauf von der Kamera (23) ein Bild (25,26) des Bearbeitungsraums (8) mit dem Laserpointer-Punkt (22a) aufgenommen wird, worauf die Position, insbesondere die Bildkoordinaten, des Laserpointer-Punktes (22a) ausgewertet wird und mit dem Maschinenkoordinaten der Fokussiereinheit (12) und dem Schlitten (14) mit den Bildkoordinaten zusammengeführt wird.

13. Verfahren nach einem der vorhergehenden Ansprüche 3 bis 12, **dadurch gekennzeichnet, dass** zur Kalibrierung unter Zuhilfenahme des Laserpointers (22) mit mehreren Positionen der Fokussiereinheit (12) und Schlitten (14) durchgeführt wird.

## Claims

1. Laser plotter (1) for engraving, marking and/or labeling a workpiece (7), which comprises a processing space (8) for positioning a workpiece (7), at least one beam source (4) in the form of lasers (5,6), preferably with corresponding deflection elements (11), and a preferably movable focusing unit (12), and a control unit (13) for controlling a carriage (14), preferably driven by a belt drive, with the focusing unit (12) arranged to be movable thereon, wherein at least one camera system (2) with a camera (23) is arranged for determining the position of the workpiece (7) in the processing space (8) or on the processing table (9), wherein the position detection is designed to detect the position of the workpiece (7) with the lid (21a, 21b) both open and closed, wherein the camera (23) is arranged on the lid (21) of the laser plotter (1), wherein a sensor, in particular a switching element (34), is arranged for the lid (21) to detect the position of the lid (21), wherein the control unit (13) is designed to receive the information from the sensor, in particular the switching element (34), regarding the detection of the opening or closing of the lid (21a, 21b), wherein the control unit (13) is designed to receive any detected opening angle (27), based on which a camera correction process (28) for open or closed lid (21a, 21b) can be switched, wherein the control unit (13), preferably the camera correction process (28) running in the control unit (13), selects the required correction process (29a, 29b) for the lid position (21a or 21b) and processes the captured image (25 or 26) accordingly, in particular rectifies it, and displays a corrected image (32, 33).

2. Laser plotter (1) according to claim 1, **characterized in that** the camera (23) is equipped with a so-called fisheye lens.

3. Method for determining a position of a workpiece (7) in a processing space (8) of a laser plotter (1) according to claim 1 for cutting, engraving, marking and/or labeling the workpiece (7), in which at least one beam source (4) in the form of a laser (5,6) is used in a housing (3) of the laser plotter (1), wherein the workpiece (7) is placed on a processing table (8) and the position of at least one inserted workpiece (7) on the processing table (9) or in the processing space (8) is detected via at least one camera (23), wherein for processing the workpiece (7) a laser beam (10) emitted by the beam source (4) is preferably directed via deflection elements (11) to at least one focusing unit (12), from which the laser beam (10) is deflected in the direction of the workpiece (7) and focused for processing, wherein the control is carried out via software running in a control unit (13), preferably by executing a so-called job (18), in particular transferred or loaded data, wherein the workpiece (7) is processed by moving a carriage (14) preferably via a belt drive in the X-Y direction, wherein at least one camera (23) for the processing space (8) is integrated in a lid (21) of the laser plotter (1), wherein the detection of the position of the inserted workpiece (7) or the processing space, such as the ruler, is carried out both with the lid (21a, 21b) open and closed, by means of automatic detection of the position through detection of the opening angle (27) of the lid (21), whereupon a corresponding camera correction process (28) for the open or closed lid (28) is activated, by the control unit (13) or preferably the camera correction process (28) running in the control unit (13) selecting the required correction process (29a, 29b) for the position of the lid (21a or 21b) and processing the captured image (25 or 26) accordingly, in particular rectifying it, and displaying a corrected image (32, 33).

4. Method for calibrating the relationship of the image coordinates with the machine coordinates of a laser plotter according to claim 1 for cutting, engraving, marking and/or labeling the workpiece (7), in which at least one beam source (4) in the form of a laser (5,6) is used in a housing (3) of the laser plotter (1), wherein the workpiece (7) is placed on a processing table (8) and the position of at least one inserted workpiece (7) on the processing table (9) or in the processing space (8) is detected via at least one camera (23), wherein for the calibration process the carriage (14) and the focusing unit (12) are positioned at a freely selectable or defined position, whereupon an image (25, 26) of the processing space (8) is taken by the camera (23) in the lid (21) with activated laser pointer (22), in particular visible laser pointer point (22a), wherein the image coordinates of the laser pointer (22), in particular the laser pointer point (22a), are determined via evaluation software and these image coordinates are matched with the machine coordinates of the focusing unit (12) and the carriage (14), wherein an exact rectification of the image (25, 26) is carried out.

5. Method according to claim 3 or 4, **characterized in that** at least during the initial commissioning of the laser plotter (1), a calibration process (29) with open and closed lid (21a, 21b) is carried out for the camera correction process (28), by placing a calibration object (30) with calibration symbols (31) arranged thereon on the processing table (9).

6. Method according to one of the preceding claims 3 to 5, **characterized in that** the opening and closing of the lid (21) is detected via a switching element (34), which sends a corresponding signal to the control unit (13) of the laser plotter (1).

7. Method according to one of the preceding claims 3 to 6, **characterized in that** the position of the workpiece (7) is displayed directly on a connected external component (15), in particular a laptop, or an integrated screen.

8. Method according to one of the preceding claims 3 to 7, **characterized in that** a lens, in particular a so-called fisheye lens, is used in the camera (23), which covers the entire processing space (8).

9. Method according to one of the preceding claims 3 to 8, **characterized in that** the detection of the position of one or more inserted workpieces (7) is triggered manually via the external component (15) or an operating element or touchscreen on the laser plotter (1).

10. Method according to one of the preceding claims 3 to 9, **characterized in that** after the position detection of the workpiece (7), the focusing unit (12) is positioned manually or automatically according to the displayed workpiece (7) for processing the workpiece (7).

11. Method according to one of the preceding claims 3 to 10, **characterized in that** different calibration parameters are stored and loaded for different lenses of the focusing unit (12) for the camera (23).

12. Method according to one of the preceding claims 3 to 11, **characterized in that** after activation of the calibration process, the laser pointer is activated or checked whether it is already activated, whereupon the focusing unit is moved to a predefined position on the processing table, in particular with an inserted calibration object, whereupon an image (25, 26) of the processing space (8) with the laser pointer point (22a) is taken by the camera (23), whereupon the position, in particular the image coordinates, of the laser pointer point (22a) is evaluated and merged with the machine coordinates of the focusing unit (12) and the carriage (14) with the image coordinates.

13. Method according to one of the preceding claims 3 to 12, **characterized in that** the calibration is carried out with the aid of the laser pointer (22) at several positions of the focusing unit (12) and the carriage (14).

## Revendications

1. Traceur laser (1) destiné à la gravure, au marquage et/ou à l'étiquetage d'une pièce à usiner (7), comprenant une zone de traitement (8) pour le positionnement de ladite pièce (7), au moins une source de rayonnement (4) sous forme de laser (5,6), de préférence associée à des éléments de déviation (11), une unité de focalisation (12) de préférence mobile, et une unité de commande (13) configurée pour piloter un chariot (14), de préférence entraîné par courroie, sur lequel ladite unité de focalisation (12) est montée de manière mobile, un système de caméra (2) comprenant une caméra (23) étant prévu pour détecter la position de la pièce à usiner (7) dans la zone de traitement (8) ou sur la table de traitement (9), **caractérisé en ce que** la détection de position est conçue pour fonctionner aussi bien avec le couvercle (21a, 21b) ouvert que fermé, la caméra (23) est montée sur le couvercle (21) du traceur laser (1), un capteur, notamment un élément de commutation (34), est prévu pour détecter la position du couvercle (21), l'unité de commande (13) est configurée pour recevoir les informations du capteur relatives à l'ouverture ou à la fermeture du couvercle (21a, 21b), l'unité de commande (13) est également configurée pour recevoir tout angle d'ouverture (27) détecté, un processus de correction de caméra (28) est commutable en fonction de la position détectée du couvercle (21), l'unité de commande (13), et de préférence ledit processus de correction de caméra (28) exécuté dans ladite unité, sélectionne le processus de correction (29a, 29b) approprié à la position du couvercle (21a ou 21b), traite l'image capturée (25 ou 26), notamment par redressement, et affiche une image corrigée (32, 33).

2. Traceur laser (1) selon la revendication 1, **caractérisé en ce que** la caméra (23) est équipée d'un objectif de type œil de poisson.

3. Procédé de détection de la position d'une pièce à usiner (7) dans une zone de traitement (8) d'un traceur laser (1) selon la revendication 1, dans lequel au moins une source de rayonnement (4) sous forme de laser (5,6) est utilisée dans un boîtier (3), la pièce à usiner (7) est placée sur une table de traitement (8), la position de ladite pièce (7) est détectée par au moins une caméra (23), un faisceau laser (10) émis par la source (4) est dirigé, de préférence via des éléments de déviation (11), vers au moins une unité de focalisation (12), qui le dévie et le focalise sur la pièce (7), la commande est assurée par un logiciel exécuté dans une unité de commande (13), notamment via un « job » (18), la pièce (7) est traitée par déplacement d'un chariot (14) en X-Y, la caméra (23) est intégrée dans le couvercle (21), la détection de position est assurée aussi bien avec le couvercle (21a, 21b) ouvert que fermé, via la détection de l'angle d'ouverture (27), un processus de correction de caméra (28) est activé en fonction de la position du couvercle, l'image capturée (25 ou 26) est traitée et corrigée (32, 33).

4. Procédé de calibration de la relation entre les coordonnées d'image et les coordonnées machine d'un traceur laser selon la revendication 1, dans lequel une image (25, 26) de la zone de traitement (8) est capturée par la caméra (23) avec un pointeur laser (22) activé, les coordonnées d'image du point laser (22a) sont déterminées, ces coordonnées sont comparées aux coordonnées machine de l'unité de focalisation (12) et du chariot (14), une correction précise de l'image est effectuée.

5. Procédé selon la revendication 3 ou 4, **caractérisé en ce qu'**un processus de calibration (29) est effectué lors de la première mise en service du traceur laser (1), avec le couvercle (21a, 21b) ouvert et fermé, un objet de calibration (30) comportant des symboles de calibration (31) étant placé sur la table de traitement (9).

6. Procédé selon l'une des revendications 3 à 5, **caractérisé en ce que** l'ouverture et la fermeture du couvercle (21) sont détectées par un élément de commutation (34), qui transmet un signal correspondant à l'unité de commande (13).

7. Procédé selon l'une des revendications 3 à 6, **caractérisé en ce que** la position de la pièce à usiner (7) est affichée directement sur un composant externe (15), notamment un ordinateur portable, ou sur un écran intégré.

8. Procédé selon l'une des revendications 3 à 7, **caractérisé en ce qu'**un objectif de type œil de poisson est utilisé dans la caméra (23), couvrant l'ensemble de la zone de traitement (8).

9. Procédé selon l'une des revendications 3 à 8, **caractérisé en ce que** la détection de la position d'une ou plusieurs pièces à usiner (7) est déclenchée manuellement via le composant externe (15) ou un élément de commande ou écran tactile du traceur laser (1).

10. Procédé selon l'une des revendications 3 à 9, **caractérisé en ce qu'**après détection de la position de la pièce (7), l'unité de focalisation (12) est positionnée manuellement ou automatiquement en fonction de la position détectée.

11. Procédé selon l'une des revendications 3 à 10, **caractérisé en ce que** différents paramètres de calibration sont enregistrés et chargés pour différentes lentilles de l'unité de focalisation (12).

12. Procédé selon l'une des revendications 3 à 11, **caractérisé en ce qu'**après activation du processus de calibration, le pointeur laser est activé ou vérifié, l'unité de focalisation étant déplacée vers une position prédéfinie, une image (25, 26) étant capturée avec le point laser (22a), dont les coordonnées sont fusionnées avec les coordonnées machine.

13. Procédé selon l'une des revendications 3 à 12, **caractérisé en ce que** la calibration à l'aide du pointeur laser (22) est effectuée à plusieurs positions de l'unité de focalisation (12) et du chariot (14).
